(19) Europäisches Patentamt
European Patent Office
Office européen des brevets

(11) EP 4 729 755 A1

(12) **EUROPEAN PATENT APPLICATION**

(43) Date of publication:
**22.04.2026 Bulletin 2026/17**

(21) Application number: **25208479.3**

(22) Date of filing: **14.10.2025**

(51) International Patent Classification (IPC):
***F02C 3/22*** *(2006.01)* ***F02C 9/40*** *(2006.01)*
***F23R 3/14*** *(2006.01)* ***F23R 3/28*** *(2006.01)*
***F23R 3/34*** *(2006.01)* ***F23R 3/36*** *(2006.01)*

(52) Cooperative Patent Classification (CPC):
**F02C 3/22; F02C 9/40; F23R 3/14; F23R 3/286; F23R 3/346; F23R 3/36;** F05D 2240/127; F05D 2250/311; F05D 2250/313; F05D 2250/314; F05D 2250/36; F05D 2270/082; F05D 2270/31; F23R 2900/00002; F23R 2900/03341

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.10.2024 IT 202400023052**

(71) Applicants:
- **Ansaldo Energia Switzerland AG**
  **5400 Baden (CH)**
- **ANSALDO ENERGIA S.p.A.**
  **16152 Genova (IT)**

(72) Inventors:
- **CIANI, Andrea**
  **5400 BADEN (CH)**
- **DUESING, Michael Klaus**
  **5400 BADEN (CH)**
- **PENNELL, Douglas**
  **5400 BADEN (CH)**
- **AMATO, Alberto**
  **16152 GENOVA (IT)**
- **TAY WO CHONG HILARES, Luis**
  **5400 BADEN (CH)**

(74) Representative: **Studio Torta S.p.A.**
**Corso Magenta, 56**
**20123 Milano (IT)**

# (54) HYBRID FUEL GAS TURBINE ENGINE

(57) A gas turbine engine includes a compressor (2), a combustor (3), a turbine (5), a primary supply system (6) supplying a primary fuel (F1) containing ammonia, a secondary supply system (7) supplying a secondary flow (F2) containing air and/or a fuel, and a control system (8). The combustor (3) includes a combustion chamber (12), a plurality of burner assemblies (10), each having a respective reaction zone (Zt) inside the combustion chamber (12), and a plurality of injectors (11), configured to inject the secondary fluid (F2) downstream of the reaction zones (Zt) of the burner assemblies (10). The control system (8) is configured to control the primary supply system (6) so that the burner assemblies (10) transform a first mixture having a first fuel-air equivalence ratio ($\phi 1$) greater than 1 in the reaction zone (Zt) and to control the primary supply system (6) so that the injectors (11) inject the secondary fluid (F2) into the combustion chamber (12) with a second fuel-air equivalence ratio ($\phi 2$) lower than 1.

SECONDARY SUPPLYSYSTEM
F2
6b
7
12a
10
15
22
22c
11
ϕ2
6a'
20
Zt
30
6
6a
ϕ1
Za
Zp
FUEL SUPPLY SYSTEM
F1
B
25
16
C
8
21
22a
22b
13
11a
12
CONTROL SYSTEM

FIG. 4



EP 4 729 755 A1

## Description

### Cross-reference to related applications

This patent application claims priority from Italian patent application no. 102024000023052 filed on October 16, 2024, the entire disclosure of which is incorporated herein by reference.

### Technical field

The present invention relates to a hybrid fuel gas turbine engine, a method for controlling a hybrid fuel gas turbine engine and a combustor for a hybrid fuel gas turbine engine.

### Background

As is known, ammonia is a promising fuel that can be used to supply gas turbine engines and make a strong contribution to decarbonization. On the one hand, the combustion of ammonia is in fact completely carbon-free and, on the other, ammonia is a fuel suitable for the efficient and long-lasting storage of large amounts of chemical energy. The volume required can be considerably reduced, for example compared to hydrogen, because ammonia is rather easy to liquefy and can be maintained in the liquid state at a relatively low pressure even at room temperature. In this way, not only storage, but also transportation and distribution can be made efficient, safe and economical.

However, it is known that the combustion of ammonia under normal operating conditions of the gas turbine engines, particularly in lean premix mode, produces large amounts of nitrogen oxides (NOx). NOx emissions are critical and must be minimized, as must carbon monoxide emissions. Therefore, the mixtures of ammonia and carbon-based fuels, such as natural gas or methane, may not meet the current stringent requirements for NOx emissions when supplied directly to gas turbine engines. The advantage of a zero-carbon or at least low-carbon combustion can therefore be nullified by a corresponding increase in NOx emissions.

On the other hand, there is evidence that the use of a rich mixture, with fuel/air equivalence ratio greater than 1, can be a solution to the problem of emissions of NOx from ammonia combustion, but would require completely new combustion systems.

In addition, the reactivity of ammonia is relatively low and represents another obstacle that makes it difficult to use in gas turbine engines, either as a fuel alone, or mixed with other components.

In other words, the gas turbine engines are not normally compatible with the supply of ammonia as the sole fuel or as a component of a natural gas mixture.

### Summary

It is therefore an aim of the present invention to provide a gas turbine engine, a method for controlling a gas turbine engine and a combustor for a gas turbine engine that allow to overcome or at least mitigate the described limitations.

According to one aspect of the present invention, a gas turbine engine is provided, comprising:

a compressor, a combustor and a turbine;
a primary supply system supplying a primary fuel containing ammonia;
a secondary supply system supplying a secondary flow containing air and/or a fuel; and
a control system;
wherein the combustor comprises a combustion chamber, a plurality of burner assemblies, each having a respective reaction zone inside the combustion chamber, and a plurality of injectors, configured to inject the secondary fluid downstream of the reaction zones of the burner assemblies; and
wherein the control system is configured to control the primary supply system so that the burner assemblies transform a first mixture having a first fuel-air equivalence ratio greater than 1 in the first reaction zone and to control the secondary supply system so that the injectors inject the secondary fluid into the combustion chamber with a second fuel-air equivalence ratio lower than 1.

In this way, in the reaction zone of the burner assembly the mixture containing the primary fuel, i.e. ammonia, is subject to a thermochemical decomposition in the absence of oxygen, given the value of the first fuel-air equivalence ratio. In practice, the first burner is used as an ammonia cracker and the molecular hydrogen product of the decomposition, highly reactive, is subsequently burned as a result of the excess oxygen combustion following the injection of the secondary fluid with the second fuel-air equivalence ratio lower than 1. The secondary fluid may be air or a secondary fuel, for example: a highly reactive fuel, in particular a fuel with a high hydrogen content, such as ammonia; a mixture of nitrogen and hydrogen, or a mixture of ammonia and hydrogen or a mixture of ammonia, nitrogen and hydrogen; fuel gas, such as natural gas or syngas; or a mixture of nitrogen, hydrogen and a fuel gas; or mixtures thereof. The combustion of the molecular hydrogen substantially depletes in a short time or otherwise lowers the availability of oxygen and prevents the formation of excess nitrogen oxides. The control therefore allows to take advantage of the use of ammonia as a fuel, while maintaining compliance with regulations on polluting emissions.

Furthermore, the invention may be integrated without substantial modifications into existing gas turbine engines. On the one hand, in fact, the design of the machines may be easily adapted in order to allow operation with ammonia. On the other hand, even already installed gas turbine engines may be modified by retrofitting operations to be compatible with the use of ammonia as fuel.

According to a further aspect of the invention, the first fuel-air equivalence ratio is between 1 and 1.5.

The range of values of the first fuel-air equivalence ratio guarantees on the one hand low emissions of nitrogen oxides and, on the other, the conditions for the thermochemical decomposition of the primary fuel.

According to a further aspect of the invention, the second fuel-air equivalence ratio is lower than 0.4.

According to a further aspect of the invention, the combustion chamber is of an annular type and has a coupling wall and wherein each burner assembly comprises a first burner and a second burner, defining a first portion and a second portion of the respective reaction zone and arranged coaxially along an axis of the respective burner assembly, with the first burner around the second burner and the first portion radially external to the second portion of the reaction zone.

In addition to generally favouring the use of ammonia as a fuel and improving emissions, the invention allows in practice to realize a sequential combustion scheme even in a type of combustor in which combustion normally takes place in a single stage, to the advantage of efficiency and further improvement in emission control.

According to a further aspect of the invention, each injector has a plurality of nozzles arranged so that the secondary fluid is injected downstream of the reaction zone of the respectively adjacent burner assemblies.

The injection downstream of the reaction zone of the burner assemblies ensures that the secondary fluid interacts with the combustion products of the burner assemblies after ammonia decomposition, without premature interference.

According to a further aspect of the invention, the burner assemblies communicate with the combustion chamber through the coupling wall and wherein each injector comprises a respective tubular body, extending from the coupling wall towards the interior of the combustion chamber along an injector axis.

The structure defines a simple and effective way to bring the secondary fluid downstream of the reaction zone of the burners.

According to a further aspect of the invention, the injectors comprise respective elongated bodies, having a trailing edge and extending from an inner shell to an outer shell of the combustion chamber transversely to a gas flow through the combustion chamber.

The injectors in the form of elongated bodies transverse to the flow of gas therethrough allow to maintain the advantages linked to the abatement of polluting emissions, without necessarily occupying space between the burner assemblies. This space is therefore available and may be used according to design preferences, for example to house acoustic dampers.

According to a further aspect of the invention, the trailing edge of the injectors has lobes.

The presence of the lobes favours the mixing of the flows, to the benefit of combustion efficiency.

According to a further aspect of the invention, a method for controlling a gas turbine engine is provided, wherein the gas turbine engine comprises:

a compressor, combustor and turbine; and
a primary supply system;
a secondary supply system supplying a secondary flow containing air and/or a fuel; and
a control system;
wherein the combustor comprises a combustion chamber, a plurality of burner assemblies, each having a respective reaction zone inside the combustion chamber, and a plurality of injectors, configured to inject the secondary fluid downstream of the reaction zones of the burner assemblies;
the method comprising:

> supplying a primary fuel to the burner assemblies and supplying a secondary fluid to the injectors, wherein the primary fuel contains ammonia and the secondary fluid contains air and/or a fuel; and
> controlling the primary supply system so that the burner assemblies transform a first mixture having a first fuel-air equivalence ratio greater than 1 in the reaction zone and the secondary fluid has a second fuel-air equivalence ratio lower than 1 in the second reaction zone.

According to a further aspect of the invention, a combustor for a gas turbine engine is provided, comprising:

a combustion chamber;
a plurality of burner assemblies, operable with a primary fuel containing ammonia and each having a respective reaction zone within the combustion chamber; and
a plurality of injectors, configured to inject a secondary fluid downstream of the reaction zones of the burner assemblies.
wherein the combustion chamber is of an annular type and has a coupling wall and wherein each burner assembly comprises a first burner and a second burner, defining a first portion and a second portion of the respective reaction zone and arranged coaxially along an axis of the respective burner assembly, with the first burner around the second burner and the first portion radially external to the second portion of the reaction zone.

## Brief description of the figures

To better understand the present invention preferred embodiments thereof will be now described, for merely exemplary and non-limiting purposes, with reference to the appended drawings, wherein:

- Figure 1 is a simplified block diagram of a gas turbine engine in accordance with an embodiment of the present invention;
- Figure 2 shows an axial cross-section of a component in use in the gas turbine engine of Figure 1, in accordance with an embodiment of the present invention;
- Figure 3 is a schematic front view of the component of Figure 2;
- Figure 4 is an axial cross-section of an enlarged detail of the component of Figure 2;
- Figure 5 shows an enlarged detail of the view of Figure 3;
- Figure shows 6 an enlarged detail of the view of Figure 3 in accordance with a different embodiment of the present invention;
- Figure 7 is an axial cross-section of an enlarged detail of a portion of the component of Figure 2 in a different embodiment of the invention;
- Figure 8 shows an axial cross-section of a component in use in the gas turbine engine of Figure 1, in accordance with a further embodiment of the present invention;
- Figure 9 is a schematic front view of a part of the component of Figure 8; and
- Figure 10 is a schematic front view of a part of the component of Figure 8 in accordance with a further embodiment of the present invention.

Description of embodiments

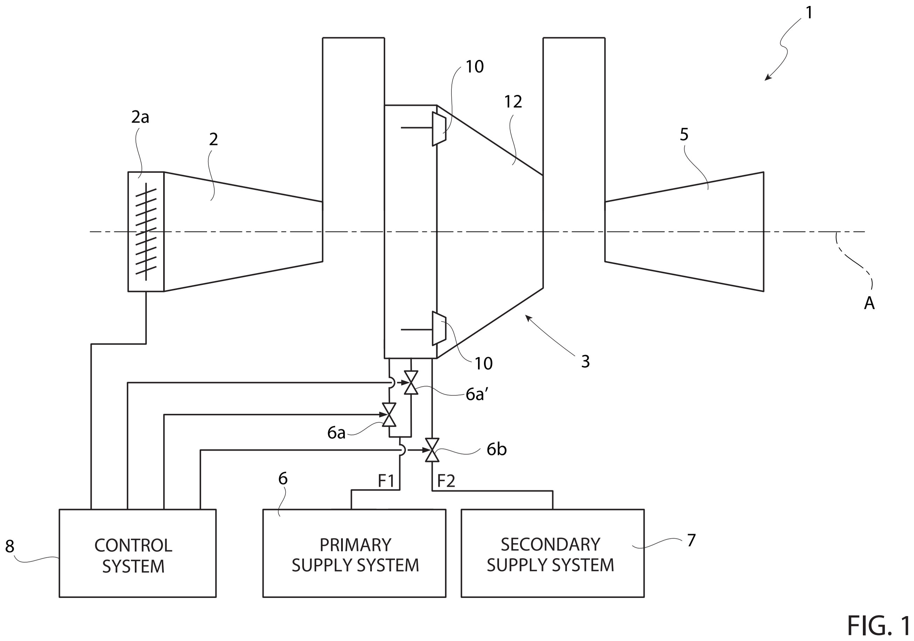

With reference to Figure 1, a gas turbine engine is designated as a whole by the numeral 1 and comprises a compressor 2, a combustor 3, a turbine 5, a primary supply system 6, a secondary supply system 7 and a control system 8.

The compressor 2 and the turbine 5 are mounted on the same shaft, which extends along a main axis A.

In the embodiment described herein, the combustor 3 is of an annular type and is arranged around the main axis A between the compressor 2 and the turbine 5. However, this should not be considered limiting, as the invention may also be advantageously used with combustion chambers of different type, in particular of silo type.

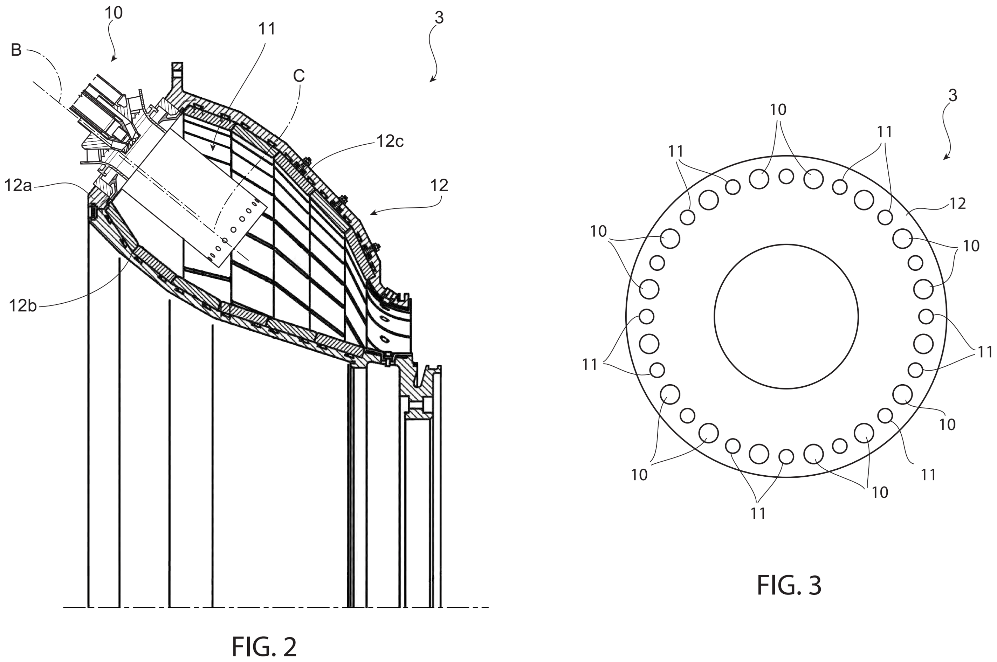

The combustor 3 comprises a plurality of burner assemblies 10 and of injectors 11 and an annular combustion chamber 12, as shown in Figure 2. The burner assemblies 10 and the injectors 11 are circumferentially distributed and, in the embodiment shown herein, alternated about axis A. Thus, each burner assembly 10 in this case has two adjacent injectors 11. The burner assemblies 10 are mounted via respective burner inserts 13 in respective burner seats in a coupling wall 12a of the combustion chamber 12.

The primary supply system 6 (Figure 1) is configured to supply the combustor 3 with ammonia ($NH_3$) gas as the primary fuel F1.

The secondary supply system 7 is configured to provide the combustor 3, in addition, with a secondary fluid F2, which may be air or a secondary fuel, for example: a highly reactive fuel, in particular a fuel with a high hydrogen content, such as ammonia; a mixture of nitrogen and hydrogen; fuel gas, such as natural gas or syngas; or a mixture of nitrogen, hydrogen and a fuel gas.

The primary supply system 6 and the secondary supply system 7 may share a plenum (not shown) surrounding the combustion chamber 3 to supply an air flow to the burner assemblies 10 and the injectors 11.

The control system 8 defines a load set-point for the gas turbine engine 1 and drives the engine actuators (inlet guide vanes 2a of the compressor 2 and control valves 6a, 6a' for the primary fuel F1 and 6b for the secondary fluid F2) to supply air and fuel flows to the combustor 3 so as to meet the load set-point. In particular, to exclusively supply air as secondary fluid F2 to the injectors 11, the control system 8 may close the valve 6b and interrupt the delivery of fuel to the injectors 11.

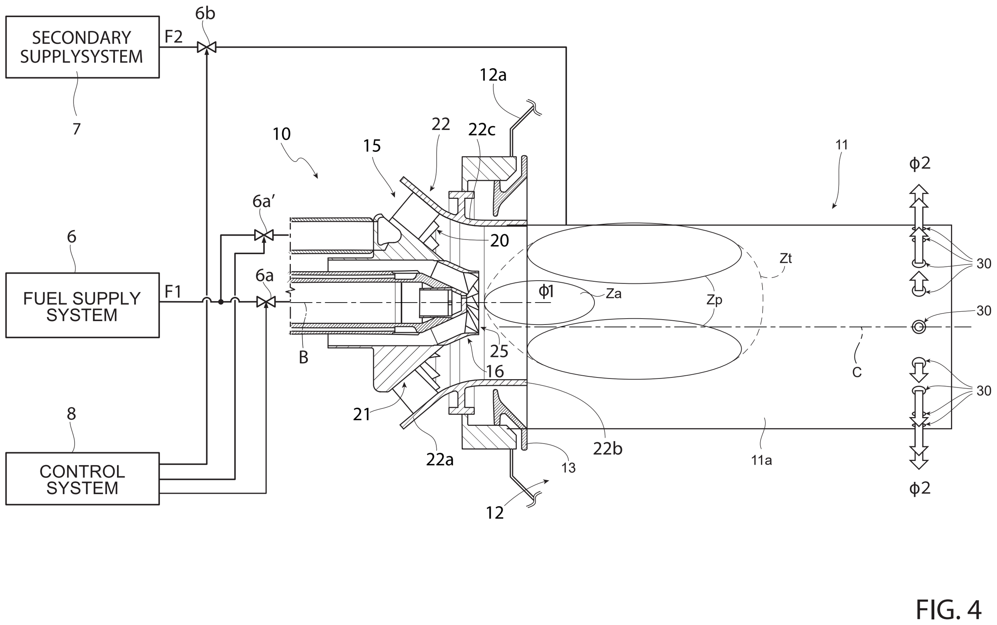

Figures 3 and 4 show in detail one of the burner assemblies 10, with one of the adjacent injectors 11, and a portion of the combustion chamber 12. The burner assembly 10 extends along a burner axis B and comprises a peripheral or diagonal burner 15 and an axial burner 16, arranged coaxially around the burner axis B with the peripheral burner 15 arranged around the axial burner 16.

The peripheral burner 15 is of a premix type, arranged around the axial burner 16 and communicating with the combustion chamber 12 through the respective burner insert 13. More in detail, the peripheral burner 15 extends through an opening in the coupling wall 12a, so that the outlet of the peripheral burner 15 is inside the combustion chamber 12.

The peripheral burner 15 is arranged around the axial burner 16 and is provided with a device for the generation of vortices or turbulence, referred to as a diagonal swirler and indicated by the reference numeral 20. The diagonal swirler 20 extends around the burner axis B and is defined radially between an inner frustoconical body 21 and an outer frustoconical body 22 of the peripheral burner 15. The inner frustoconical body 21 in one embodiment may be a monolithic body, for example made by an additive manufacturing process such as SLM (Selective Laser Melting). The outer frustoconical body 22 is axially hollow and comprises a frustoconical wall 22a and, in one embodiment, an end portion 22b, for example cylindrical and connected to the frustoconical wall 22a by a connecting portion 22c. The frustoconical wall 22a coaxially houses the inner frustoconical body 21, so that between the outer frustoconical body 22 and the inner frustoconical body 21 a substantially annular space 23 is defined which constitutes a passage for the supply of the air-fuel mixture.

The peripheral burner 15 is configured to define a peripheral reaction zone Zp of a substantially annular shape, possibly divergent, around the burner axis B.

The axial burner 16 comprises an axial swirler 25 which is partly housed inside the inner frustoconical body 21 and protrudes axially in continuity with the surface of the inner frustoconical body 21.

The axial burner 16 is configured to define an axial reaction zone Za along the burner axis B radially internal to the peripheral reaction zone Zp. More precisely, the axial reaction zone Za and the peripheral reaction zone Zp are coaxial and symmetrical about the burner axis B. The axial reaction zone Za is defined immediately downstream of the axial burner 16 and may be partly contained in an end portion of the peripheral burner 15, in particular in the end portion 22b. The peripheral reaction zone Zp is defined substantially downstream of the outer frustoconical body 22 and may possibly retract in the axial direction until it is partly included in the end portion of the peripheral burner 15, for example according to the operating conditions. The peripheral reaction zone Zp extends in part around the axial reaction zone Za and there may be an overlap. Together, the peripheral reaction zone Zp and the axial reaction zone Za define a total reaction zone Zt of the burner assembly 10.

In the embodiment of Figure 3, both the peripheral burner 15 and the axial burner 16 receive the primary fuel F1, ammonia, from the primary supply system 6.

Each injector 11 comprises a respective tubular body 11a, for example cylindrical, extending from the coupling wall 12a towards the interior of the combustion chamber 12 along an injector axis C. In one embodiment, the injector axis C is perpendicular to the coupling wall 12a. A first end of the injector 11 is fixed to the coupling wall 12a and is open to receive the secondary fluid F2 through the coupling wall 12a itself, while a second end is blind. More precisely, according to the composition, the secondary fluid F2 may be supplied through the central cavity or channels (not shown) of the tubular body 11a.

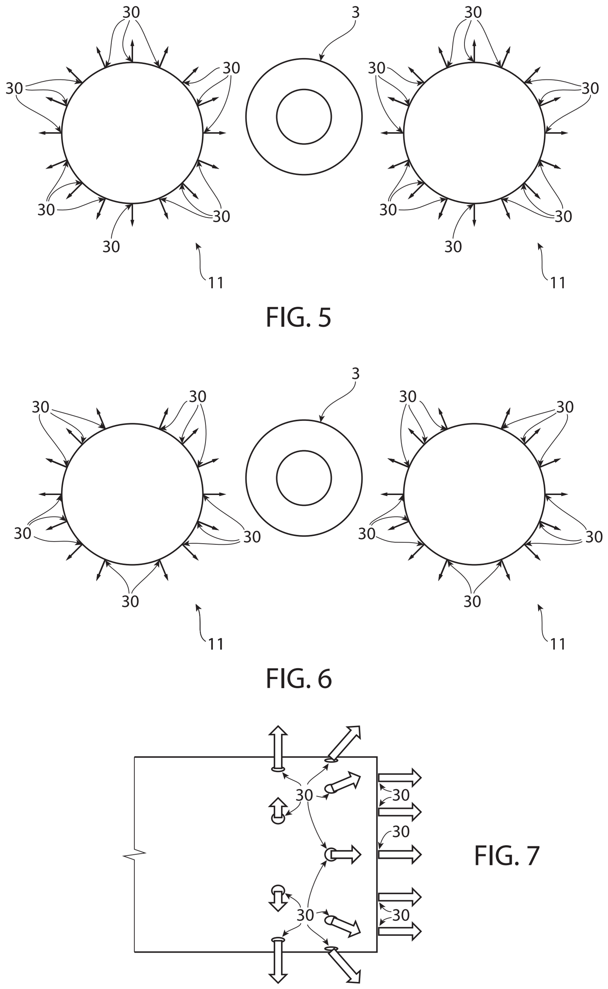

At the second end, the injector 11 is provided with nozzles 30 arranged circumferentially and configured to inject the secondary fluid F2 transversely to the injector axis C, for example in a perpendicular direction. The nozzles 30 are not necessarily uniformly spaced in the circumferential direction (Figure 5), but they may be distributed differently according to design preferences. For example, the nozzles 30 could be closer together near the adjacent burner assemblies 10 and more spaced apart or absent elsewhere, as in the example of Figure 6. The nozzles 30 need not necessarily be configured to inject fuel perpendicularly to the injector axis C. In the embodiment of Figure 7, for example, the nozzles 30 are configured in part to inject perpendicularly and in part to inject at angles lower than 90° with respect to the injector axis C. In addition, some of the nozzles 30 may be arranged at the end of the injector 11 and deliver fuel in a direction parallel to the injector axis C. However, it is understood that the configurations of Figures 4-7 are provided only as non-limiting embodiments and the number, arrangement, position, and angle of injection of the nozzles 30 may be flexibly chosen based on the design preferences.

Furthermore, the nozzles 30 are arranged with respect to the injector axis C so that the injection of the secondary fluid F2 is carried out downstream of the reaction zone Zt of the respectively adjacent burner assemblies 10, without substantially interfering with the combustion of the primary fuel F1 in the reaction zone Zt itself. In practice, the injection of the secondary fluid F2 is carried out when the combustion reactions of the burner assembly 10 are actually exhausted.

The control system 8 acts on the control valves 6a, 6a' , 6b (as well as on the inlet guide vanes of the compressor 2) to provide the axial burner 16 and the peripheral burner 15, alternatively or simultaneously, with a mixture of air and the primary fuel F1 with controlled fuel-air equivalence ratio.

The fuel-air equivalence ratio for a mixture is defined as

$$\phi = \frac{m_F / m_A}{(m_F / m_A)_{ST}}$$

where $m_F$ is a fuel flow rate of the mixture, $m_A$ is an air flow rate of the mixture, and $(m_F/m_A)_{ST}$ is the ratio between fuel flow rate and air flow rate under stoichiometric conditions.

The peripheral burner 15 and the axial burner 16 receive a mixture having a first fuel-air equivalence ratio $\phi 1$ greater than 1, which is transformed in the axial reaction zone Za. More precisely, the first fuel-air equivalence ratio $\phi 1$ is between 1 and 1.5 and, in this way, the ammonia in the primary fuel F1 is decomposed into molecular hydrogen and molecular nitrogen by oxygen-deficient thermochemical decomposition (pyrolysis) in the reaction zone Zt of the burner assembly 10.

The injector 11 receives the secondary fluid F2 from the secondary supply system 7 and injects it downstream of the reaction zone Zt of the burner assembly 10 through the nozzles 30. Secondary fluid F2 has a second fuel-air equivalence ratio $\phi 2$ significantly lower than 1. For example, the second fuel-air equivalence ratio $\phi 2$ is lower than 0.4. As already mentioned, in particular, the secondary fluid F2 may be air ($\phi 2 = 0$) or fuel with a high hydrogen content, such as ammonia, a mixture of nitrogen and hydrogen, a fuel gas, or a mixture of nitrogen, hydrogen and fuel gas. In these cases, the control system 8 controls the second fuel-air equivalence ratio $\phi 2$ so as to obtain the desired value.

In practice, the burner assembly 10 (or individually one between the peripheral burner 15 and the axial burner 16) is used as an ammonia cracker and the molecular hydrogen produced by decomposition, highly reactive, is subsequently burned by effect of the excess oxygen combustion of the secondary fluid F2 provided by the injector 11 downstream of the peripheral reaction zone Zp. The combustion of the molecular hydrogen substantially depletes in a short time or otherwise lowers the availability of oxygen and reduces the formation of nitrogen oxides.

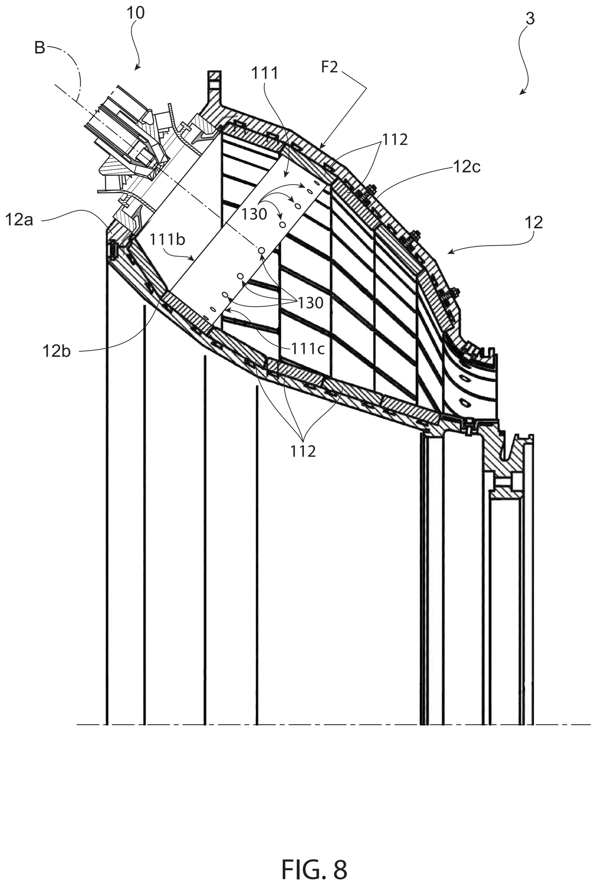

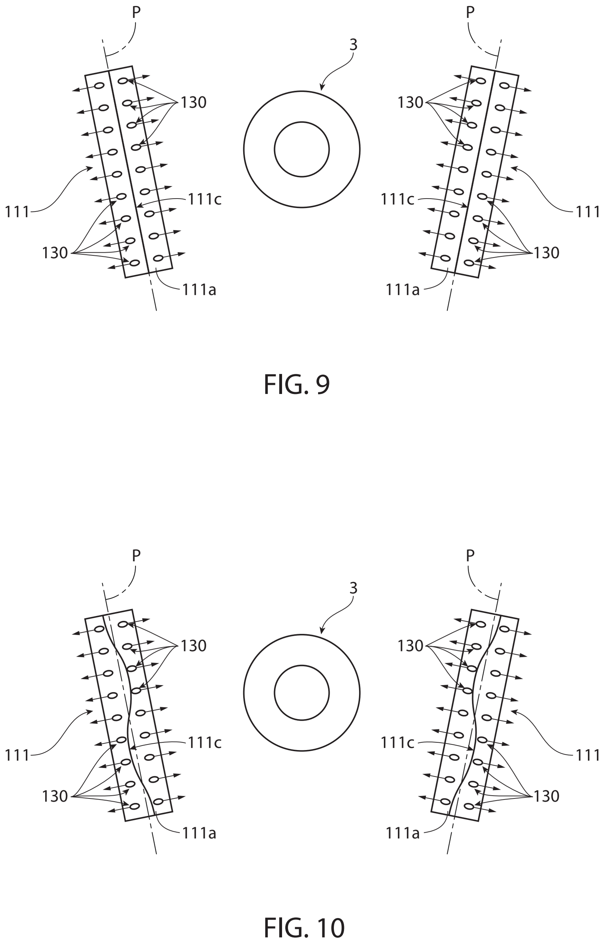

According to a different embodiment of the invention shown in Figures 8 and 9, where parts identical to those already described are denoted with the same reference numerals the injectors, herein denoted with 111, comprise respective elongated bodies 111a, preferably aerodynamic bodies with a leading edge 111b and a trailing edge 111c, which extend transversely to the combustion chamber 12 and in a direction substantially perpendicular to the gas flow. More in detail each injector 111 has a first end and a second end fixed respectively to an inner shell 12b and to an outer shell 12c of the combustion chamber 12. The fixing may be obtained through heat-insulating tiles 112 forming a heat shield of the combustion chamber 12. The injector 111 may receive the secondary fluid F2 for example through fixing to the outer shell 12c.

In circumferential direction, the injectors 111 alternate with the burner assemblies 10.

Each injector 111 is provided with nozzles 130 arranged for example along the trailing edge 111c and configured to inject the secondary fluid F2 transversely and/or in the same direction with respect to the flow of the gases in the combustion chamber 12. The nozzles 130 are not necessarily spaced uniformly along the trailing edge 111c, but may be distributed differently according to design preferences.

With respect to the direction of the flow of the gases, moreover, the nozzles 130 are arranged so that the injection of the secondary fluid F2 is carried out downstream of the reaction zone Zt of the respectively adjacent burner assemblies 10, without substantially interfering with the combustion of the primary fuel F1 in the reaction zone Zt itself.

In one embodiment (Figure 10), the trailing edges 111c of the injectors 111 may have lobes to favour mixing.

As in the embodiment of Figures 2-6, the first fuel-air equivalence ratio $\phi 1$ is between 1 and 1.5, while the second fuel-air equivalence ratio $\phi 2$ is much lower than 1, possibly zero if the secondary fluid F2 is only air.

Although with a different configuration, the same type of reaction described above takes place, which is substantially determined by the values of the fuel-air equivalence ratios. Ammonia is thermally decomposed into molecular hydrogen and oxygen-deficient molecular nitrogen, this time in the peripheral reaction zone, and the molecular hydrogen is subsequently burned by the excess oxygen combustion in the secondary fluid by the burner in the axial reaction zone.

Finally, it is clear that the gas turbine engine, method and burner assembly described and shown herein, may be modified and varied without departing from the protective scope of the present invention, as defined in the attached claims.

## Claims

1. A gas turbine engine comprising:

    a compressor (2), a combustor (3) and a turbine (5);
    a primary supply system (6) supplying a primary fuel (F1) containing ammonia;
    a secondary supply system (7) supplying a secondary flow (F2) containing air and/or a fuel; and a control system (8);
    wherein the combustor (3) comprises a combustion chamber (12), a plurality of burner assemblies (10), each having a respective reaction zone (Zt) inside the combustion chamber (12), and a plurality of injectors (11; 111), configured to inject the secondary fluid (F2) downstream of the reaction zones (Zt) of the burner assemblies (10); and
    wherein the control system (8) is configured to control the primary supply system (6) so that the burner assemblies (10) transform a first mixture having a first fuel-air equivalence ratio ($\phi 1$) greater than 1 in the reaction zone (Zt) and to control the secondary supply system (7) so that the injectors (11; 111) inject the secondary fluid (F2) into the combustion chamber (12) with a second fuel-air equivalence ratio ($\phi 2$) lower than 1.

2. The gas turbine engine according to claim 1, wherein the first fuel-air equivalence ratio ($\phi 1$) is between 1 and 1.5.

3. The gas turbine engine according to claim 1 or 2, wherein the second fuel-air equivalence ratio ($\phi 2$) is lower than 0.4.

4. The gas turbine engine according to any one of the preceding claims, wherein the combustion chamber (12) is of an annular type and has a coupling wall (12a) and wherein each burner assembly (10) comprises a first burner (15) and a second burner (16), defining a first portion (Zp) and a second portion (Za) of the respective reaction zone (Zt) and arranged coaxially along an axis (B) of the respective burner assembly (10), with the first burner (15) around the second burner (16) and the first portion (Zp) radially external to the second portion (Za) of the reaction zone (Zt).

5. The gas turbine engine according to claim 4, wherein the injectors (11; 111) are alternated with the burner assemblies (10) in a circumferential direction of the combustion chamber (12).

**6.** The gas turbine engine according to claim 5, wherein each injector (11; 111) has a plurality of nozzles (30; 130) arranged so that the secondary fluid (F2) is injected downstream of the reaction zone (Zt) of the respectively adjacent burner assemblies (10).

**7.** The gas turbine engine according to any one of claims 4 to 6, wherein the burner assemblies (10) communicate with the combustion chamber (12) through the coupling wall (12a) and wherein each injector (11) comprises a respective tubular body (11a), extending from the coupling wall (12a) towards the interior of the combustion chamber (12) along an injector axis (C).

**8.** The gas turbine engine according to claim 7, wherein each of the injectors (11) has a first end, fixed to the coupling wall (12a) and open to receive the secondary fluid (F2), and a second end and wherein the nozzles (30) are circumferentially arranged at the second end and are configured to inject the secondary fluid F2 transversely and/or in a direction parallel to the injector axis (C).

**9.** The gas turbine engine according to any one of claims 4 to 6, wherein the injectors (111) comprise respective elongated bodies (111a) having a trailing edge (111c) and extending from an inner shell (12b) to an outer shell (12c) of the combustion chamber (12) transversely to a gas flow through the combustion chamber (12).

**10.** The gas turbine engine according to claim 9, wherein the nozzles (130) are arranged at the trailing edge (111c) and are configured to inject the secondary fluid (F2) transversely and/or in a direction parallel to the gas flow in the combustion chamber (12).

**11.** The gas turbine engine according to claim 9 or 10, wherein the trailing edge (111c) of the injectors (111) has lobes.

**12.** The gas turbine engine according to claim 4 to 11, wherein each burner assembly (10) comprises an inner frustoconical body (21) and an outer frustoconical body (22) and wherein the first burner (15) comprises a diagonal swirler (20), delimited internally by the inner frustoconical body (21) and externally by the outer frustoconical body (22), and the second burner (16) comprises an axial swirler (25), housed in the inner frustoconical body (21).

1
10
12
2a
2
5
A
10
3
6a'
6a
6b
6
F1
F2
8
CONTROL
SYSTEM
PRIMARY
SUPPLY SYSTEM
SECONDARY
SUPPLY SYSTEM
7

FIG. 1

3
12
10
11

FIG. 3

3
12
12c
C
11
10
B
12a
12b

FIG. 2

SECONDARY SUPPLYSYSTEM
7
FUEL SUPPLY SYSTEM
6
CONTROL SYSTEM
8
F2
F1
6b
6a'
6a
10
15
22
22c
12a
20
25
16
22a
21
12
13
22b
B
11
11a
C
Zt
Zp
Za
ϕ1
ϕ2
30

FIG. 4

30
3
30
30
30
30
30
30
30
30
30
30
11
11

FIG. 5

3
30
30
30
30
30
30
30
30
30
30
11
11

FIG. 6

30
30
30
30
30
30

FIG. 7

10
3
B
111
F2
112
12c
130
12a
12
111b
130
12b
111c
112

FIG. 8

P
P
3
130
130
111
111
111c
111c
130
130
111a
111a

FIG. 9

P
P
3
130
130
111
111
111c
111c
130
130
111a
111a

FIG. 10

Europäisches Patentamt
European Patent Office
Office européen des brevets

# EUROPEAN SEARCH REPORT

Application Number
EP 25 20 8479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | JP 2019 088107 A (HITACHI AUTOMOTIVE SYSTEMS LTD) 6 June 2019 (2019-06-06)<br>* paragraph [0002] *<br>* paragraph [0028] - paragraph [0037] *<br>* paragraph [0041] - paragraph [0045] *<br>* paragraph [0070] *<br>* abstract; figures *<br>& JP WO20 1908 8107 A1<br>12 November 2020 (2020-11-12)<br>----- | 1-3<br><br>4-12 | INV.<br>F02C3/22<br>F02C9/40<br>F23R3/14<br>F23R3/28<br>F23R3/34<br>F23R3/36 |
| X<br><br>A | JP H04 139312 A (CENTRAL RES INST ELECT; TOSHIBA CORP) 13 May 1992 (1992-05-13)<br>* the whole document *<br>----- | 1-3<br><br>4-12 | |
| X<br><br>A | US 2024/060645 A1 (MEDINA AGUSTIN VALERA [GB]) 22 February 2024 (2024-02-22)<br>* paragraph [0001] - paragraph [0003] *<br>* paragraph [0100] - paragraph [0106] *<br>* paragraph [0115] - paragraph [0118] *<br>* paragraph [0134] - paragraph [0135] *<br>* abstract; figures *<br>----- | 1-3<br><br>4-12 | TECHNICAL FIELDS SEARCHED (IPC) |
| A | EP 4 206 535 A1 (ANSALDO ENERGIA SWITZERLAND AG [CH])<br>5 July 2023 (2023-07-05)<br>* paragraph [0027] - paragraph [0035] *<br>* paragraph [0038] *<br>* paragraph [0042] *<br>* abstract; figures *<br>----- | 1-12 | F02C<br>F23R |
| A | US 5 239 818 A (STICKLES RICHARD W [US] ET AL) 31 August 1993 (1993-08-31)<br>* column 8, line 9 - line 34 *<br>* abstract; figures *<br>* column 3, line 4 - column 5, line 5; figures *<br>----- | 1-12 | |

The present search report has been drawn up for all claims

1

| Place of search | Date of completion of the search | Examiner |
|---|---|---|
| The Hague | 12 February 2026 | O'Shea, Gearóid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 8479

This annex lists the patent family members relating to the patent documents cited in the above-mentioned European search report. The members are as contained in the European Patent Office EDP file on The European Patent Office is in no way liable for these particulars which are merely given for the purpose of information.

12-02-2026

| Patent document cited in search report | Publication date | Patent family member(s) | Publication date |
|---|---|---|---|
| JP 2019088107 A | 06-06-2019 | JP 7058107 B2 | 21-04-2022 |
| | | JP 7470148 B2 | 17-04-2024 |
| | | JP 2019088107 A | 06-06-2019 |
| | | JP 2022087201 A | 09-06-2022 |
| JP H04139312 A | 13-05-1992 | JP 2859411 B2 | 17-02-1999 |
| | | JP H04139312 A | 13-05-1992 |
| US 2024060645 A1 | 22-02-2024 | AU 2021377754 A1 | 29-06-2023 |
| | | CN 116685763 A | 01-09-2023 |
| | | EP 4244535 A1 | 20-09-2023 |
| | | JP 2023549386 A | 24-11-2023 |
| | | US 2024060645 A1 | 22-02-2024 |
| | | WO 2022101608 A1 | 19-05-2022 |
| EP 4206535 A1 | 05-07-2023 | CN 116379472 A | 04-07-2023 |
| | | EP 4206535 A1 | 05-07-2023 |
| US 5239818 A | 31-08-1993 | CA 2089296 A1 | 01-10-1993 |
| | | DE 69312362 T2 | 19-02-1998 |
| | | EP 0564183 A1 | 06-10-1993 |
| | | JP H0618034 A | 25-01-1994 |
| | | JP H0788947 B2 | 27-09-1995 |
| | | US 5239818 A | 31-08-1993 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT 102024000023052